# EUROPÄISCHE PATENTANMELDUNG

(11) **EP 4 386 223 A1**
(43) Veröffentlichungstag der Anmeldung: **19.06.2024**
(21) Anmeldenummer: 22213942.0
(22) Anmeldetag: 15.12.2022
(51) Int. Cl.: F16C 17/24, F16C 33/20, F16C 41/00, F16C 17/00, H05K 1/00

(54) **GLEITELEMENT MIT EINEM MITTEL ZUR VERSCHLEISSERKENNUNG**

(71) Anmelder: voestalpine Camtec GmbH, 4020 Linz (AT)
(72) Erfinder: MITTER, Thomas, 4191 Vorderweißenbach (AT); REISCHL, Alexander, 4824 Gosau (AT); LACKNER, Bernhard, 4020 Linz (AT)
(74) Vertreter: Lambsdorff & Lange Patentanwälte Partnerschaft mbB

(57) **Zusammenfassung**

Es wird ein Gleitelement mit einer ebenen metallischen Gleitfläche beschrieben, die im Betrieb mit einer Gegenfläche eines Bauteils zusammenwirkt und dabei als Verschleißfläche vorgesehen ist. Die metallische Gleitfläche weist eine Aufnahmevertiefung auf, in welcher eine zur Verschleißerkennung vorgesehene Leiterplatte mit einer oberflächenseitigen Metallisierung lagefest eingesetzt ist, derart, dass eine Oberfläche der Metallisierung im Wesentlichen koplanar mit oder um eine vorgegebene Distanz vertieft gegenüber der Gleitfläche ist.

## Beschreibung

Die Erfindung betrifft ein Gleitelement mit einer ebenen metallischen Gleitfläche. Ferner betrifft die Erfindung ein Verfahren zur Herstellung eines solchen Gleitelements sowie Verfahren zum Erkennen eines Verschleißzustands der Gleitfläche eines Gleitelements.

Gleitelemente sind bekannt und kommen in der Technik in einer Vielzahl von Anwendungen zum Einsatz . Ihre Aufgabe besteht darin, für Reibkontakte eine Verschleißfläche (Abriebfläche) mit definierten Eigenschaften zur Verfügung zu stellen, welche den Reibpartner (z.B. ein Handhabungsmaterial oder ein Maschinenbauteil) vor Verschleiß schützt. Vor allem in der Automobilindustrie, z.B. in Karosseriepressen, sowie in der Maschinenbauindustrie, z.B. in Werkzeugschlittenführungen, als auch im Werkzeugbau, z.B. in Spritzgießwerkzeugen, kommen Gleitelemente zum Einsatz. Ferner werden sie in Stahl- und Walzwerken z.B. als Werkzeugführungen eingesetzt.

Gleitelemente müssen in definierten Wartungsintervallen oder nach Detektion eines unzulässigen Verschleißniveaus ausgetauscht werden. Eine Verschleißprüfung vermeidet ein verfrühtes Austauschen von Gleitelementen oder kann ein zu spätes Austauschen der Gleitelemente und damit verbundene Folgeschäden verhindern. Sie ist allerdings in vielen Fällen mit einem aufwendigen Kontrollvorgang am Gleitelement verbunden. Manchmal erfordert die Verschleißprüfung die Demontage des Gleitelements, die in einigen Fällen durch eine erschwerte Zugänglichkeit mit erheblichem Aufwand verbunden ist. Ferner sind für die Erkennung des Verschleißgrads in der Regel mehrere Messungen in externen Messeinrichtungen durchzuführen.

Aus WO 2020/097659 A1 ist ein Verschleißsensor für Maschinenbauteile bekannt, bei dem parallele Leiterbahnen einer Leiterplatte abhängig vom Verschleiß unterbrochen werden.

Aus AU 2018101067 A4 ist ein Verschleißsensor bekannt, welcher eine Leiterplatte aufweist, die senkrecht zur Gleitfläche orientiert ist, wobei die Leiterbahnen sequenziell aufgetrennt werden.

Aus WO 2020/074536 A1 ist eine additiv gefertigte Leiterbahnstruktur zur Verschleißerkennung bekannt, die auf einem vorgefertigten Kunststoff-Gleitelement aufgebracht ist.

Aus EP 3 469 224 B1 ist eine Funktionsschaltung bekannt, die mit einem Detektorelement in Verbindung steht, welches in einer Aussparung einer Kunststoff-Gleitfläche untergebracht ist. Die Verschleißerkennung erfolgt durch Leitungsunterbrechung am Detektorelement.

Eine der Erfindung zugrunde liegende Aufgabenstellung kann darin gesehen werden, ein Gleitelement zu schaffen, welches die Verschleißüberprüfung vereinfacht. Ferner zielt die Erfindung darauf ab, ein Verfahren zur Herstellung eines solchen Gleitelements sowie Verfahren zum vereinfachten Erkennen eines Verschleißzustands der Gleitfläche eines Gleitelements anzugeben.

Die der Erfindung zugrunde liegende Aufgabenstellung wird durch die Merkmale der unabhängigen Ansprüche gelöst. Ausführungsbeispiele und Weiterbildungen sind Gegenstand der abhängigen Ansprüche.

Demnach weist ein Gleitelement eine ebene metallische Gleitfläche auf, die im Betrieb mit einer Gegenfläche eines Bauteils zusammenwirkt und dabei als Verschleißfläche vorgesehen ist. Die metallische Gleitfläche weist eine Aufnahmevertiefung auf, in welcher eine zur Verschleißerkennung vorgesehene Leiterplatte mit einer oberflächenseitigen Metallisierung lagefest eingesetzt ist. Die Oberfläche der Metallisierung ist im Wesentlichen koplanar mit oder um eine vorgegebene Distanz vertieft gegenüber der Gleitfläche. Dabei dient die Leiterplatte mit Metallisierung zur Erkennung eines Verschleißzustands des Gleitelements.

Vorzugsweise kann die Aufnahmevertiefung als Durchgangsloch ausgeführt sein. Dies kann das lagefeste Verankern der Leiterplatte in der Aufnahmevertiefung erleichtern. Außerdem ermöglicht eine als Durchgangsloch ausgeführte Aufnahmevertiefung die rückseitige Kontaktierung der Leiterplatte z.B. mittels Leitungsverbindungen.

Eine als Durchgangsloch ausgeführte Aufnahmevertiefung kann eine Radialstufe aufweisen, an welcher die Leiterplatte befestigt ist. Die Radialstufe ermöglicht eine stabile Fixierung der Leiterplatte an ihrer Rückseite. Optional kann sie auch die Einbaulage der Leiterplatte vorgeben.

Je nach der zu überwachenden Verschleißgrenze der metallischen Gleitfläche kann die Dicke der Metallisierung zwischen 35 und 400 µm, insbesondere zwischen 50 und 200 µm betragen.

Die Metallisierung kann eine Basismetallschicht aus einem Leiterbahnmetall, insbesondere Kupfer, und eine über der Basismetallschicht angeordnete Endschicht aufweisen, die aus einem die Basismetallschicht vor Oxidation schützenden Metall, insbesondere Silber oder Gold besteht. Die Endschicht bewirkt einen Korrosionsschutz der Basismetallschicht, wodurch verhindert wird, dass Metalloxide die Metallisierung bedecken und in den Bereich zwischen die Reibpartner gelangen können.

In einer Ausführungsvariante kann die Leiterplatte elektrische Durchkontaktierungen aufweisen. Diese ermöglichen eine elektrische Kontaktierung der Metallisierung an der der Metallisierung abgewandten Seite der Leiterplatte, beispielsweise durch elektrische Verbindungsleitungen zu einer externen Messvorrichtung. Dadurch kann eine einfache Restdickenbestimmung der Metallisierung vorgenommen werden, z.B. auch ohne dass hierfür die metallische Gleitfläche zugänglich sein muss.

In einer alternativen Ausführungsvariante weist die Leiterplatte keine elektrischen Durchkontaktierungen auf. In diesem Fall kann die Verschleißerkennung durch eine Sichtprüfung der Metallisierung oder durch eine Messung einer für die Restdicke der Metallisierung charakteristischen Größe an der Vorderseite der Metallisierung erfolgen.

Vorzugsweise umfasst die metallische Gleitfläche eine Legierung auf der Basis von Kupfer, insbesondere Bronze oder Messing, oder eine Legierung, die als (zulegierte) Legierungskomponente Kupfer aufweist, insbesondere eine Aluminium-Zink Legierung mit Kupfer als Legierungskomponente. D.h., vorzugsweise ist Kupfer ein Legierungsbestandteil (und insbesondere das Basismaterial) der Legierung, wodurch das Abriebmaterial der Leiterplatten-Metallisierung (üblicherweise Kupfer) kein "Fremdmetall" auf der Gleitfläche darstellt und somit nicht stört.

Gleitelemente der beschriebenen Art können in vielfältigen Anwendungen zum Einsatz kommen, insbesondere als Gleitplatte, insbesondere Deckplatte, als Gleitleiste, insbesondere Flachleiste oder Winkelleiste, als Führung, insbesondere Führungsleiste, Mehrflächenführung, Prismenführung, Laschenführung, Rechteckführung, oder als Anlaufscheibe oder Überlaufkeil.

Ein Verfahren zur Herstellung eines Gleitelements mit einem Mittel zur Verschleißerkennung umfasst das Bereitstellen eines Gleitelements mit einer ebenen metallischen Gleitfläche, die im Betrieb mit einer Gegenfläche eines Bauteils zusammenwirkt und dabei als Verschleißfläche vorgesehen ist. In der metallischen Gleitfläche wird eine Aufnahmevertiefung gebildet. Eine zur Verschleißerkennung vorgesehene Leiterplatte mit einer oberflächenseitigen Metallisierung wird in der Aufnahmevertiefung lagefest fixiert, derart, dass eine Oberfläche der Metallisierung im Wesentlichen koplanar mit oder um eine vorgegebene Distanz vertieft gegenüber der Gleitfläche ist.

Das Verfahren ermöglicht eine besonders einfache und kostengünstige Realisierung eines Gleitelements mit einem Mittel zur Verschleißerkennung, insbesondere auch deshalb, weil als Leiterplatten eine Vielzahl von Standard-Leiterplatten eingesetzt werden können, deren Kosten gering sind. Außerdem ist das Einbringen einer Aufnahmevertiefung in die metallische Gleitfläche ein Prozess, der nahezu keine Mehrarbeit erfordert, da wartungsfreie Gleitelemente in der Regel mit einer Vielzahl von Aufnahmevertiefungen in der metallischen Gleitfläche versehen werden, in welchen Festschmierstoffeinsätze, beispielsweise Grafiteinsätze befestigt werden.

Der Einbau der Leiterplatte in die Aufnahmevertiefung kann vorzugsweise dadurch erfolgen, dass die Leiterplatte zunächst in die Aufnahmevertiefung eingesetzt wird, wobei die oberflächenseitige Metallisierung nach außen gewandt ist. Das Gleitelement wird dann auf eine ebene Montageplatte platziert, so dass die metallische Gleitfläche auf der ebenen Montageplatte aufliegt. An der ebenen Montageplatte erfolgt ein Ausrichten der Metallisierung der Leiterplatte. Vor oder nach dem Einsetzen der Leiterplatte in die Aufnahmevertiefung wird ein Klebstoff zum lagefesten Fixieren der Leiterplatte in die Aufnahmevertiefung eingebracht. Durch die Verwendung eines Klebstoffes kann eine hohe Planarität bei der Ausrichtung der Metallisierung der Leiterplatte an der ebenen Montageplatte erreicht werden. Der Klebstoff ermöglicht, dass die bei der Ausrichtung erzielte Planarität bei der Fixierung der Leiterplatte in der Aufnahmevertiefung nicht verloren geht.

Die Erfindung gestattet es auf einfache Weise, den Verschleißzustand der Gleitfläche zu erkennen. Nach einem ersten Aspekt umfasst ein Verfahren zum Erkennen des Verschleißzustands der Gleitfläche eines Gleitelements die Durchführung einer Sichtprüfung der Metallisierung nach einem durch Betrieb bewirkten Verschleiß. Durch die Sichtprüfung lässt sich erkennen, ob eine der ursprünglichen Dicke der Metallisierung (zuzüglich einer Einbautiefe, sofern vorhanden) entsprechende Verschleißtiefe erreicht ist oder nicht.

Nach einem weiteren Verfahren kann ein durch Betrieb bewirkter Verschleiß durch ein Messen einer für die Dicke der Metallisierung charakteristischen Größe durch Annähern und/oder Ansetzen eines Messgeräts an die Metallisierung ermittelt werden.

Eine andere Möglichkeit, die den Ausbau des Gleitelements überflüssig macht, besteht darin, den Verschleiß durch Messen einer für die Dicke der Metallisierung charakteristischen Größe über elektrische Durchkontaktierungen der Leiterplatte zu ermitteln, die eine elektrische Kontaktierung der Metallisierung von der der Metallisierung abgewandten Seite der Leiterplatte ermöglichen.

Beispiele und Ausführungsformen der Erfindung werden nachfolgend unter Bezugnahme auf die Zeichnungen näher erläutert. Gleiche Bezugszeichen bezeichnen identische oder einander entsprechende Teile. Die Merkmale der verschiedenen dargestellten Ausführungsformen können kombiniert werden, sofern sie sich nicht gegenseitig ausschließen, und/oder sie können selektiv weggelassen werden, wenn sie nicht als unbedingt erforderlich beschrieben sind.
Figur 1A zeigt in schematischer Querschnittsansicht eine Gleitpaarung aus einem Bauteil und einem Gleitelement ohne Verschleiß.
Figur 1B zeigt in schematischer Querschnittsansicht die Gleitpaarung aus Figur 1A nach einem Materialabtrag (Verschleiß) am Gleitelement.
Figur 2 zeigt in schematischer Querschnittsansicht ein erstes Ausführungsbeispiel eines Gleitelements mit einem Mittel zur Verschleißerkennung.
Figur 3 zeigt ein Detail von Figur 2.
Figur 4 zeigt in schematischer Querschnittsansicht ein zweites Ausführungsbeispiel eines Gleitelements mit einem Mittel zur Verschleißerkennung.
Figur 5 zeigt in schematischer Querschnittsansicht ein drittes Ausführungsbeispiel eines Gleitelements mit einem Mittel zur Verschleißerkennung.
Figuren 6A und 6B zeigen perspektivische Darstellungen beispielhafter Leiterplatten, die für die Verschleißerfassung eingesetzt werden können.
Figuren 7A-7C zeigen in schematischer Darstellung Querschnittsansichten verschiedener Metallisierungen von Leiterplatten.
Figuren 8A-8G zeigen Beispiele für verschiedene Gleitelemente.
Figur 9 zeigt ein Ablaufdiagramm, in welchem Schritte eines Verfahrens zur Herstellung eines Gleitelements mit einem Mittel zur Verschleißerkennung angegeben sind.
Figur 10 zeigt in beispielhafter Weise das Ausrichten der Metallisierung der Leiterplatte an einer ebenen Montageplatte.
Figur 11 zeigt ein Verfahren zum Erkennen eines Verschleißzustands der Gleitfläche eines Gleitelements durch Sichtprüfung.
Figur 12 zeigt ein Verfahren zum Erkennen eines Verschleißzustands der Gleitfläche eines Gleitelements durch Messung.

Der Begriff "über", der in Bezug auf ein Element oder eine Materialschicht verwendet wird, das oder die "über" einer Oberfläche gebildet oder angebracht wird, kann hier in der Bedeutung verwendet werden, dass das Element oder die Materialschicht "indirekt auf" der Oberfläche angebracht wird, wobei zwischenliegende Elemente oder Schichten zwischen der Oberfläche und dem Element oder der Materialschicht vorhanden sein können. Jedoch kann der Begriff "über" auch die spezielle Bedeutung haben, dass das Element oder die Materialschicht, die "über" einer Oberfläche gebildet oder angebracht wird, "direkt auf", d.h. z.B. in direktem Kontakt mit der betreffenden Oberfläche steht. Das Gleiche gilt analog für ähnliche Begriffe wie z.B. "darüberliegend", "unter", "darunterliegend" usw.

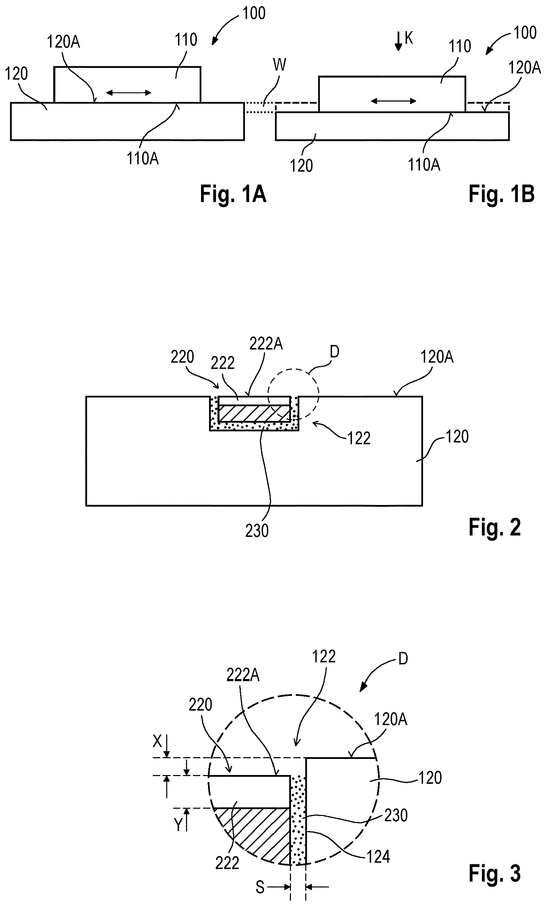

Die Figuren 1A und 1B zeigen eine Gleitpaarung 100 aus einem Bauteil 110 und einem Gleitelement 120 vor bzw. nach dem Auftreten eines Verschleißes W am Gleitelement 120.

Gleitpaarungen 100 dieser Bauart weisen eine harte, weitestgehend verschleißfreie Gleitfläche 110A am Bauteil 110 und eine weichere Gleitfläche 120A am Gleitelement 120 auf. Das unterschiedliche Verschleißverhalten der beiden Gleitflächen 110A, 120A wird durch die Materialien der Gleitpaarung 100 bewirkt. Das Bauteil 110 kann insgesamt oder zumindest an seiner Gleitfläche 110A beispielsweise aus einem harten Metall, einem Stahl oder einer anderen harten Metalllegierung, gegebenenfalls auch aus einer Keramik, bestehen oder eine oder mehrere dieser Materialen umfassen.

Das Gleitelement 120 umfasst oder besteht im Bereich seiner Gleitfläche 120A überwiegend oder vollständig aus einem weicheren metallischen Material, beispielsweise aus Bronze, Messing (z.B. CuZn25A15, insbesondere CuZn25A15Mn4Fe3-C) oder einer anderen weichen Kupferlegierung. Das metallische Material der Gleitfläche 120A kann auch aus einer Legierung eines anderen Basismetalls bestehen oder eine solche Legierung umfassen, die vorzugsweise als (zulegierte) Legierungskomponente Kupfer aufweist. Beispielsweise kann es sich um eine Aluminium-Zink Legierung mit Kupfer als Legierungskomponente (z.B. ZnAl32Cu4) handeln. Da in diesen Fällen Kupfer ein Legierungsbestandteil (insbesondere das Basismaterial) der Legierung ist, bringt ein Kupferabrieb der Leiterplatten-Metallisierung kein "Fremdmetall" auf die Gleitfläche 120A auf.

Die Gleitfläche 110A des Bauteils 110 und die Gleitfläche 120A des Gleitelements 120 sind ebene Oberflächen, die ein flächiges Vergleiten aneinander ermöglichen.

Das Gleitelement 120 erleidet während seines Gebrauchs einen gewollten Verschleiß. Das heißt, durch eine Gleitbewegung zwischen dem Bauteil 110 und dem Gleitelement 120 wird im Betrieb von der weichen Gleitfläche 120A fortlaufend und/oder wiederholt Material abgetragen, wodurch sich die Dicke des Gleitelements 120 verringert. Wie durch den Doppelpfeil angedeutet, kann die translatorische Relativbewegung zwischen dem Bauteil 110 und dem Gleitelement 120 z.B. in beide Richtungen erfolgen und beispielsweise oszillatorisch sein. Die Gleitflächen 110A, 120A stehen bei der Relativbewegung reibschlüssig in Kontakt und es kann eine von außen einwirkende Andruckkraft K auf die Gleitpaarung 100 ausgeübt werden.

Bei dem Bauteil 110 kann es sich beispielsweise um ein Maschinenbauteil handeln, welches das zu produzierende Produkt führt oder bearbeitet. In anderen Fällen kann das Bauteil 110 unmittelbar das herzustellende Produkt oder ein Vorprodukt desselben (z.B. Stahlband oder Stahlplatine) sein.

Das Gleitelement 120 kann ein Standard-Verschleißteil sein, welches vergleichsweise kostengünstig ist. Das damit zusammenwirkende Gegenteil, hier als Bauteil 110 bezeichnet, kann ein wesentlich komplexeres und/oder teureres Element sein, dessen Gleitfläche 110A durch die mechanische Beanspruchung so wenig wie möglich angegriffen werden soll.

Durch den Verschleiß W am Gleitelement 120 kommt es zu einer geometrischen Abweichung des Bewegungsablaufs, welcher Folgeprobleme hervorrufen kann. Beispielsweise können Folgeprobleme im weiteren Herstellungsablauf auftreten, z.B. indem Schnittspalttoleranzen nicht mehr eingehalten oder Lochstempel exzentrisch werden.

Nach einem gewissen Verschleiß muss das Gleitelement 120 folglich ausgetauscht werden. Je nach Anwendung und Einsatzgebiet können unterschiedliche Verschleißgrenzen vorgesehen sein. Beispielsweise kann ein Abrieb von etwa 250 µm als Verschleißgrenze vorgegeben sein.

Bisher wird der Verschleiß optisch oder durch Ausbau des Gleitelements 120 und Messung festgestellt. Dieser Vorgang erfolgt beispielsweise etwa einmal pro Jahr und ist in vielen Anwendungen mit einem relativ hohen Aufwand sowie in manchen Fällen mit einer Unterbrechung der Produktion verbunden.

Figur 2 zeigt ein Ausführungsbeispiel eines Gleitelements 120. Die metallische Gleitfläche 120A weist eine Aufnahmevertiefung 122 auf. In die Aufnahmevertiefung 122 ist eine Leiterplatte 220 lagefest eingesetzt. Die Leiterplatte 220 weist eine oberflächenseitige Metallisierung 222 auf. Dabei ist die Position der Leiterplatte 220 in der Aufnahmevertiefung 122 so festgelegt, dass die Oberfläche 222A der Metallisierung im Wesentlichen koplanar mit oder um eine vorgegebene Distanz vertieft gegenüber der metallischen Gleitfläche 120A ist.

Figur 3 zeigt einen Ausschnitt (Detail D) der Figur 2, in welchem der Übergang zwischen der Gleitfläche 120A und der Oberfläche 222A der Metallisierung 222 vergrößert dargestellt ist.

X bezeichnet den Abstand zwischen einer Ebene, in welcher die Gleitfläche 120A liegt, und einer Ebene, in welcher die Oberfläche 222A der Metallisierung 222 liegt. Bei Koplanarität dieser beiden Ebenen ist der Abstand X idealerweise gleich Null. Aufgrund von Einbautoleranzen, die möglichst gering gehalten werden sollen, können (ungewollte) Abstände ±X von beispielsweise gleich oder weniger als 20, 15, 10 oder 5 µm um die Nulllage auftreten.

Das heißt, bei Koplanarität der beiden Oberflächen 120A, 222A erfährt die Metallisierung 222 denselben Verschleiß W wie die Gleitfläche 120A (bei Vernachlässigung von Einbautoleranzen). Somit kann die Verringerung der Dicke Y der Metallisierung 222 als Maß für den Verschleiß W (Abriebtiefe) der Gleitfläche 120A genutzt werden.

In einem weiteren Fall kann die Leiterplatte 120 wie bereits angesprochen auch um eine vorgegebene Distanz vertieft gegenüber der Gleitfläche 120A angeordnet sein. In diesem Fall bezeichnet X diese vorgegebene Distanz zuzüglich etwaiger Einbautoleranzen, die in derselben Größenordnung wie oben genannt liegen können. Die um die vorgegebene Distanz vertiefte Einbaulage der Leiterplatte 220 bewirkt, dass ein Abrieb an der Oberfläche der Metallisierung 222 erst dann auftritt, wenn die Gleitfläche 120A bereits um V = X reduziert (verschlissen, abgenutzt) ist. Die vorgegebene Distanz X muss deutlich geringer sein als die Verschleißgrenze, da ansonsten eine Erfassung des Verschleißes mittels der Leiterplatte 220 nicht möglich ist.

In beiden Fällen (Koplanarität oder gezielt vertiefter Einbau) sind die durch die Gleitfläche 120A und die Oberfläche 222A der Metallisierung 222 definierten Ebenen (innerhalb eines Einbauwinkel-Toleranzbereichs) im Wesentlichen parallel, d.h. eine gezielte Verkippung dieser Ebenen ist nicht vorgesehen.

Zwischen dem Umfangsrand der Leiterplatte 220 und der Wand 124 der Aufnahmevertiefung 122 kann ein Spalt vorhanden sein, dessen Spaltweite S beispielsweise im Bereich von einem oder wenigen 1/10 mm liegen und damit beispielsweise deutlich größer als die Einbautoleranzen X in Axialrichtung sein kann. Die Aufnahmevertiefung 122 kann somit ein gewisses Radialspiel aufweisen, welches einen planen Einbau der Leiterplatte 220 in die Aufnahmevertiefung 122 erleichtert.

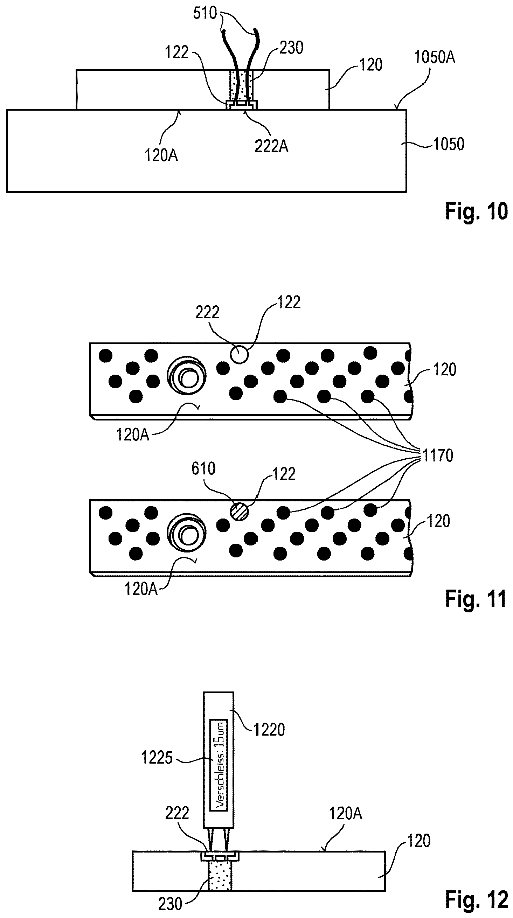

Der lagefeste Einbau der Leiterplatte 220 kann beispielsweise durch eine Verklebung mittels eines Klebstoffs 230 vorgenommen werden, der sich im eingebauten Zustand der Leiterplatte 220 zwischen der Leiterplatte 220 und der Aufnahmevertiefung 122 befindet. Der Klebstoff 230 kann beispielsweise ein mehrkomponentiger Epoxy-Klebstoff sein. Es kann derselbe Klebstoff 230 verwendet werden, mit denen beispielsweise Festschmierstoffeinsätze in weiteren Aufnahmevertiefungen der metallischen Gleitfläche 120A befestigt werden (siehe Figur 11).

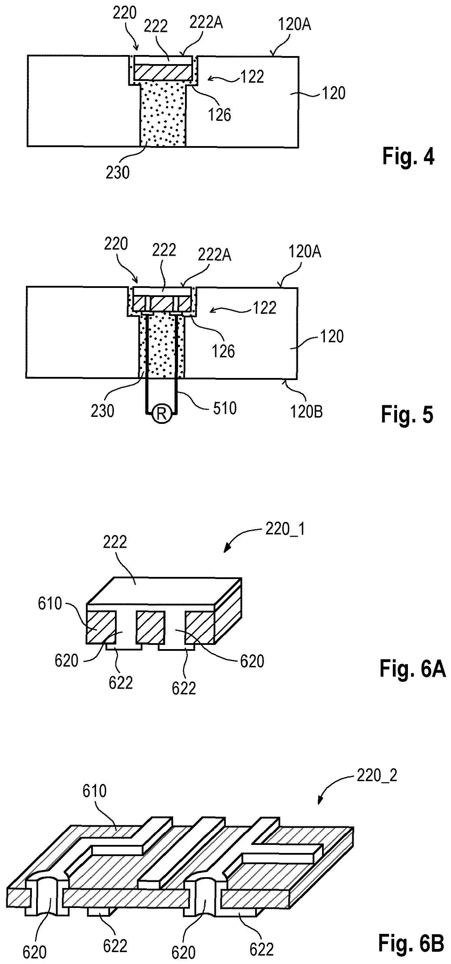

Wie in Figur 4 dargestellt, kann die Aufnahmevertiefung 122 als Durchgangsloch in dem Gleitelement 120 ausgeführt sein. Einerseits kann dies den Einbau und die lagefeste Fixierung der Leiterplatte 220 in der Aufnahmevertiefung 122 erleichtern, beispielsweise indem der noch flüssige Klebstoff 230 durch das Durchgangsloch in die Aufnahmevertiefung 122 eingebracht wird. Darüber hinaus ist es möglich, das Durchgangsloch für Leitungsverbindungen 510 zu nutzen, die die Leiterplatte 220 rückseitig kontaktieren und an der der Gleitfläche 120A gegenüberliegenden rückseitigen Oberfläche 120B des Gleitelements 120 aus diesem herausgeführt sind (siehe Figur 5).

Die als Durchgangsloch realisierte Aufnahmevertiefung 122 kann eine Radialstufe 126 aufweisen. Die Radialstufe 126 kann zur Befestigung der Leiterplatte 220 dienen, d.h. die Leiterplatte 220 kann sich zumindest indirekt an der Radialstufe 126 abstützen. Beispielsweise kann die Radialstufe 126 genutzt werden, um einen ringförmigen Bereich der Rückseite der Leiterplatte 220 mit der Radialstufe 126 zu verkleben.

Die Tiefe der Radialstufe 126, gemessen von der (unverschlissenen) Gleitfläche 120A, kann so bemessen sein, dass sie den Einbau einer Leiterplatte 220 gestattet, die zum Erkennen eines maximalen Verschleißes des Gleitelements 120 vorgesehen ist. Dasselbe Gleitelement 120 kann, je nach Anwendung, sehr unterschiedliche Verschleißgrenzen haben. Ist in einer Anwendung beispielsweise nur ein Verschleiß von 40 µm zulässig, können in anderen Anwendungen beispielsweise Verschleißgrenzen von 200 oder 250 µm toleriert werden. Für die Erkennung solcher unterschiedlichen Verschleißgrenzen können Leiterplatten 220 mit unterschiedlich dicken Metallisierungen 222, z.B. im Bereich von 35 µm - 400 µm, eingesetzt werden. Die Tiefe der Radialstufe 126 zur Gleitfläche 120A kann so gewählt werden, dass für sämtliche Verschleißgrenzen, für die das Gleitelement 120 infrage kommt, eine passende Leiterplatte 220 in der Aufnahmevertiefung 122 oberhalb der Radialstufe 126 Platz findet. Die maximale Dicke der Leiterplatte 220 ergibt sich dabei aus der maximalen Dicke der Metallisierung 222 zuzüglich der (maximalen) Dicke des Leiterplattenkerns (siehe Figuren 6A und 6B).

Da bevorzugt Standard-Leiterplatten 220 zum Einsatz kommen sollen, die Leiterplattenkerne (z.B. FR4-Prepregs) mit typischen Dicken von 50 µm bis 3200 µm aufweisen können, kann die Tiefe der Radialstufe 126 gegenüber der Oberfläche 120A beispielsweise gleich oder mehr oder weniger als 4000 µm oder 3000 µm oder 2000 µm oder 1000 µm oder 500 µm betragen.

Alternativ ist es gegebenenfalls auch möglich, die Radialstufe 126 so auf Maß zu fertigen, dass sie als Anschlag für die Leiterplatte 220 wirkt und die genaue Einbauposition der Leiterplatte 220 vorgibt.

Die Aufnahmevertiefung 122 kann oberhalb der Radialstufe 126 in Draufsicht eine beliebige Geometrie aufweisen, beispielsweise kreisförmig oder polygonal. In diesem Abschnitt kann sie z.B. als Frästasche gefertigt sein. Ist die Aufnahmevertiefung 122 als Durchgangsloch ausgebildet, kann sie im Abschnitt unterhalb der Radialstufe z.B. als Bohrung realisiert sein, d.h. beispielsweise eine zylindrische Querschnittsform aufweisen.

Die seitlichen Abmessungen (Querschnittsweite(n), z.B. Durchmesser) der Aufnahmevertiefung 122 können beispielsweise zwischen 3 und 20 mm, insbesondere 5 und 8 mm betragen. Die Aufnahmevertiefung 122 kann rotationssymmetrisch sein, es ist jedoch auch möglich, dass sie ohne Rotationssymmetrie, z.B. als Langloch, gestaltet ist.

Die Figuren 6A und 6B zeigen zwei Ausführungsbeispiele für Leiterplatten 220_1 bzw. 220_2, die auch als PCB (Printed Circuit Board) bezeichnet werden. Beide Leiterplatten 220_1, 220_2 weisen nach üblicher Bauart einen Leiterplattenkern 610 auf, welcher an seiner Oberseite mit einer Metallisierung 222 versehen ist. Die Metallisierung 222 kann durchgängig sein (siehe z.B. Figur 6A) oder sie kann in Leiterbahnen strukturiert sein (siehe z.B. Figur 6B).

Der Leiterplattenkern 610 besteht beispielsweise aus einem elektrisch isolierenden Trägermaterial. Es kann sich um einen Epoxidharz-Glasgewebe-Verbundwerkstoff (Prepreg) mit typischen Dicken zwischen 50 µm und 3200 µm handeln. Am häufigsten werden Dicken des Leiterplattenkerns 610 von etwa 1550 µm eingesetzt.

In den hier dargestellten Beispielen weisen die Leiterplatten 220_1, 220_2 elektrische Durchkontaktierungen (Vias) 620 auf, die es ermöglichen, die (strukturierte oder nicht strukturierte) Metallisierung 222 von der Rückseite zu kontaktieren. Zu diesem Zweck sind die Leiterplatten 220_1, 220_2 mit einer (optionalen) strukturierten Rückseitenmetallisierung 622 versehen.

Die oberflächenseitige Metallisierung 222 kann beispielsweise Kupfer umfassen oder daraus bestehen. Standarddicken der Metallisierung 222 können 35 µm, 70 µm, 105 µm, 140 µm, 210 µm und 400 µm betragen.

Um eine hohe Lagerfähigkeit der Leiterplatten 220 zu ermöglichen und um zu vermeiden, dass Metalloxide in die Gleitpaarung gelangen, weist die Metallisierung 222 vorzugsweise über der Basismetallschicht (z.B. Kupfer) eine Endschicht auf, die aus einem die Basismetallschicht vor Oxidation schützende Metall, insbesondere Silber oder Gold besteht.

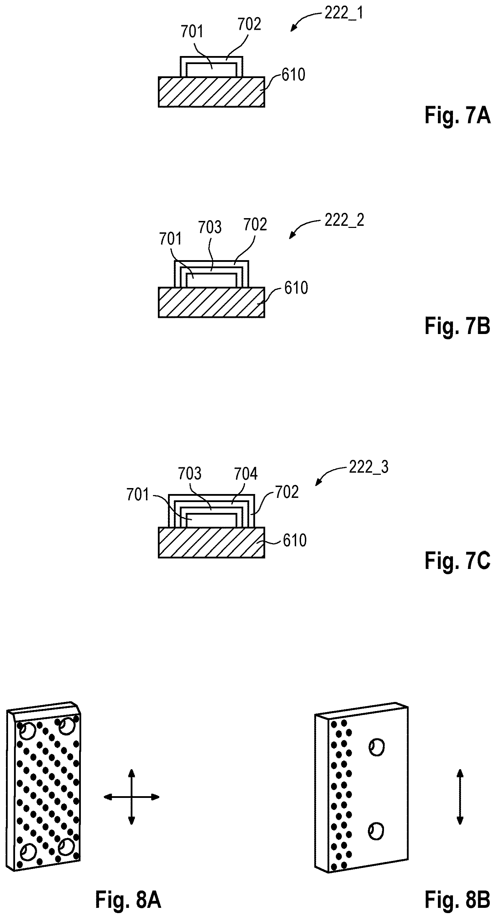

Die Figuren 7A bis 7C zeigen verschiedene Beispiele von Metallisierungen 222_1, 222_2 und 222_3, die sich bei der Verwendung von Leiterplatten 220, 220_1, 220_2 als Verschleißsensoren in Gleitelementen 120 als vorteilhaft erwiesen haben.

Sämtliche Metallisierungen 222_1, 222_2, 222_3 weisen über dem Leiterplattenkern 610 eine Basismetallschicht 701, z.B. aus Kupfer, auf. Als Endschicht 702 kann beispielsweise eine dünne Beschichtung aus Silber (Metallisierung 222_1) oder eine dünne Beschichtung aus Gold (Metallisierungen 222_2, 222_3) verwendet werden. Im Folgenden werden Beispiele von Schutzschichten mit einer Endschicht aus Silber oder Gold und optionalen Zwischenschichten aus Nickel und gegebenenfalls Palladium beschrieben, die die Basismetallschicht 701 überdecken können.

Der Schichtaufbau der Metallisierung 222_1 ist als "Chemisch-Silber" bekannt, wobei die Endschicht 702 aus Silber eine Dicke von weniger als 0,3 µm aufweisen kann. Die Metallisierung 222_2 ist als "Chemisch-Gold" oder auch ENIG (Electroless Nickel Immersion Gold) bekannt. Sie weist zwischen der Basismetallschicht 701 und der Endschicht 702 aus Gold eine Zwischenschicht 703 aus Nickel auf. Die Zwischenschicht 703 kann Dicken im Bereich von 3 - 6 µm aufweisen. Die Endschicht 702 kann eine Dicke zwischen 0,05 und 0,1 µm aufweisen. Die Gesamtdicke der Schutzschicht aus Zwischenschicht 703 und Endschicht 702 beträgt beispielsweise weniger als 7 µm.

Die Metallisierung 222_3 ist unter der Bezeichnung ENEPIG (Electroless Nickel Electroless Palladium Immersion Gold) bekannt. Die Dicke der Endschicht 702 aus Gold beträgt wiederum zwischen 0,05 und 0,1 µm. Die Zwischenschicht 703 besteht aus Nickel mit einer Dicke zwischen 3 und 8 µm. Eine weitere Zwischenschicht 704 zwischen der Zwischenschicht 703 und der Endschicht 702 besteht aus Palladium und weist eine Dicke zwischen 0,05 und 0,15 µm auf. Die Gesamtdicke der Schutzschicht bestehend aus den Zwischenschichten 703, 704 und der Endschicht 702 beträgt somit beispielsweise weniger als 9 µm.

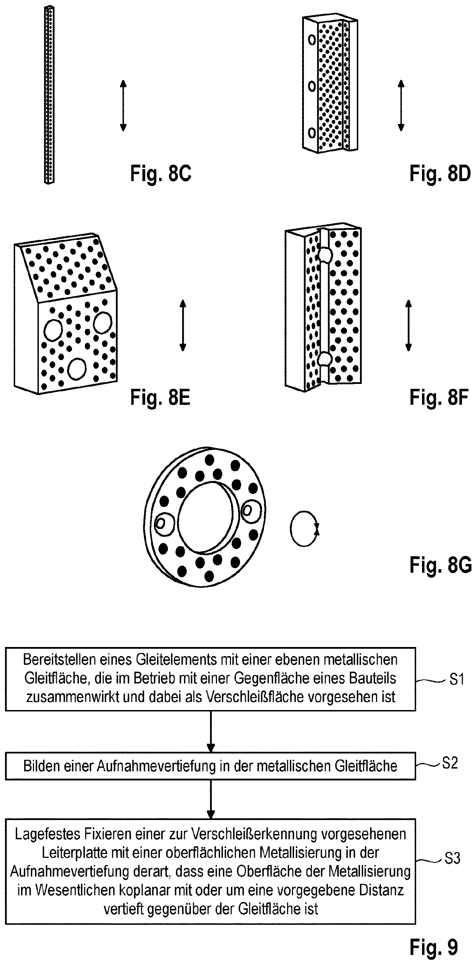

Figuren 8A-8G zeigen Ausführungsbeispiele von Gleitelementen 120, welche mit einem Mittel zur Erkennung ihres Verschleißzustands gemäß vorliegender Beschreibung ausgerüstet sein können. Solche "intelligenten" Gleitelemente 120 können z.B. als Gleitplatte (Fig. 8A), Deckplatte (Fig. 8B), Führungsleiste (Fig. 8C), Winkelleiste (Fig. 8D), Überlaufkeil (Fig. 8E), Prismenführung (Fig. 8F) oder Anlaufscheibe (Fig. 8G) ausgeführt sein. In Figur 8 sind in den Gleitflächen eingesetzte Festschmierstoffeinsätze (schwarze runde Kreisscheiben) erkennbar, ferner sind die jeweiligen Gleitrichtungen durch Pfeile angedeutet.

Im Folgenden sind beispielhafte Bemaßungen dieser Gleitelemente 120 angegeben, wobei L die Länge, B die Breite, H die Höhe, Da den Außendurchmesser, Di den Innendurchmesser und S die Stärke (d.h. Dicke in Axialrichtung) bezeichnen. Sämtliche Angaben in Bezug auf L, B und H sind auf jedwede Gleitelemente zu verallgemeinern, so dass typische Abmessungen von Gleitelementen 120 beispielsweise eine Länge zwischen 160 und 1100 mm und/oder eine Breite zwischen 90 und 160 mm und/oder eine Höhe zwischen 20 und 75 mm aufweisen können.
(Fig. 8A): Gleitplatten, z.B. L×B×H: 500×100×20 mm
(Fig. 8B): Deckplatten, z.B. L×B×H: 1005×125×30 mm
(Fig. 8C): Führungsleisten, z.B. L×B×H: 1005×45×35 mm
(Fig. 8D): Winkelleisten, z.B. L×B×H: 250×100×75 mm
(Fig. 8E): Überlaufkeile, z.B. L×B×H: 170×160×60 mm
(Fig. 8F): Prismenführung, z.B. L×B×H: 300×125×60 mm
(Fig. 8G): Anlaufscheiben, z.B. Da×Di×S: 200×175×10 mm

Anwendungsgebiete für die oben bezeichneten Gleitelemente 120 sind in der Technik bekannt. Beispielsweise werden Gleitleisten in Werkzeugschiebern und/oder Keiltriebwerkzeugen eingesetzt. Gleitleisten und Prismenführungen werden z.B. in Keiltrieben (Kaufteilschiebern oder Eigenbauschiebern) verwendet. Keiltriebe von z.B. Pressen dienen zur Umlenkung von Kräften und führen einen Arbeitshub sowie einen zu diesem gegenläufigen Rückhub durch.

Nach Figur 9 weist ein Verfahren zur Herstellung eines Gleitelements mit einem Mittel zur Verschleißerkennung bei S1 das Bereitstellen eines Gleitelements mit einer ebenen metallischen Gleitfläche auf, die im Betrieb mit einer Gegenfläche eines Bauteils zusammenwirkt und dabei als Verschleißfläche vorgesehen ist.

Bei S2 wird eine Aufnahmevertiefung in der metallischen Gleitfläche gebildet. Das Bilden der Aufnahmevertiefung kann im Zuge der ohnehin erforderlichen maschinellen Bearbeitung der Gleitfläche erfolgen. Beispielsweise können bei dem Einarbeiten von Aufnahmevertiefungen für Festschmierstoffeinsätze eine oder mehrere Aufnahmevertiefungen für die Leiterplatten gefertigt (z.B. gefräst und/oder gebohrt) werden.

Bei S3 wird eine zur Verschleißerkennung vorgesehene Leiterplatte mit einer oberflächenseitigen Metallisierung lagefest in der Aufnahmevertiefung fixiert. Die lagefeste Fixierung wird so vorgenommen, dass eine Oberfläche der Metallisierung im Wesentlichen koplanar mit - oder um eine vorgegebene Distanz vertieft gegenüber - der Gleitfläche ist.

Figur 10 zeigt eine mögliche Vorgehensweise, um die Leiterplatte 220 lagefest in der gewünschten Position in der Aufnahmevertiefung 122 zu fixieren. Beispielsweise wird die Leiterplatte 220 zunächst in die Aufnahmevertiefung 122 eingesetzt, die in dem hier dargestellten Beispiel als Stufenbohrung ausgeführt ist. Anschließend wird das Gleitelement 120 mit der geschliffenen Gleitfläche 120A auf eine Montageplatte 1050 aufgesetzt. Um Koplanarität zwischen der Oberfläche 222A der Metallisierung 222 und der Gleitfläche 120A zu erreichen, weist die Montageplatte 1050 eine ebene, geschliffene Oberfläche 1050A auf.

Sollte gezielt eine vertiefte Einbaulage der Leiterplatte 220 in dem Gleitelement 120 gewünscht sein, kann die entsprechende Tiefe X (siehe Figur 3) durch eine um die Distanz X erhabene Struktur auf der Oberfläche 1050A der Montageplatte 1050 bewirkt werden.

In beiden Fällen wird die Metallisierung 222 der Leiterplatte 220 an der Oberfläche 1050A der Montageplatte 1050 ausgerichtet. Anschließend erfolgt die Fixierung der Leiterplatte 220 in der festgelegten Position. Wie bereits beschrieben, kann dies beispielsweise durch Vergießen der Leiterplatte 220 in der Aufnahmevertiefung 122 mittels eines Klebstoffes 230 erfolgen.

Bei einer als Durchgangsloch ausgeführten Aufnahmevertiefung 122 kann der Klebstoff 230 beispielsweise von der rückseitigen Oberfläche 120B des Gleitelements 120 zur Rückseite der Leiterplatte 220 gebracht werden und diese dort verkleben. Gleichzeitig kann der Klebstoff 230 Leitungsverbindungen 510 fixieren, welche in der beschriebenen Weise über Durchkontaktierungen die Metallisierung 222 an zwei voneinander beabstandeten Punkten kontaktieren.

Das beschriebene Verfahren ermöglicht es, die Einbaulage der Metallisierung 222 mit hoher Genauigkeit vorzugeben und dies durch einen einfachen und automatisierbaren Verfahrensablauf zu erreichen.

Für die Erkennung des Verschleißzustands der Gleitfläche 120A bieten sich mehrere Möglichkeiten:
Bezugnehmend auf Figur 11 kann eine einfache Sichtkontrolle in vielen Fällen ausreichend sein. Nach Abrieb der Metallisierung 222 (z.B. strukturiert als Leiterbahnen oder als durchgängige, unstrukturierte Metallfläche) tritt der Leiterplattenkern 610 zutage (siehe Figur 11, unterer Teil), während ohne Verschleiß oder bei einem Verschleiß, der geringer als die Dicke der Metallisierung 222 (gegebenenfalls zuzüglich einer vertieften Einbaulage) ist, weiterhin die Metallisierung 222 sichtbar bleibt (oberer Teil der Figur 11) . Dieses Verfahren ist immer dann ausreichend, wenn lediglich eine Aussage über eine bestimmte Verschleißschwelle oder Verschleißgrenze benötigt wird.

Figur 11 zeigt ferner ein Array von Festschmierstoffeinsätzen 1170, die über die die Gleitfläche 120A verteilt angeordnet sind, um einen wartungsfreien Betrieb des Gleitelements 120 zu ermöglichen. In ähnlicher Weise können auch eine Mehrzahl von Aufnahmevertiefungen 122 für Leiterplatten 220 über die Gleitfläche 120A verteilt angeordnet sein. Dies kann insbesondere vorteilhaft sein bei ungleichmäßigem Verschleiß infolge z.B. asymmetrischer Belastung der Gleitfläche 120A.

Das anhand von Figur 11 erläuterte Verfahren zum Erkennen eines Verschleißzustandes durch Sichtkontrolle erfordert keine Verkabelung und geringstmögliche Zusatzkosten in Bezug auf das "intelligente" Gleitelement 120. Insbesondere gestattet es, bei konstruktiv fest vorgegebener Aufnahmevertiefung 122 durch Wahl einer gewünschten Leiterplattenstärke (insbesondere Wahl der Dicke der Metallisierung) die speziell in einer bestimmten Anwendung erforderliche Verschleißschwelle zu überwachen. Es ist auch möglich, mehrere Aufnahmevertiefungen 122 mit unterschiedlichen Leiterplatten 220 bzw. Metallisierungsdicken und/oder Einbaulagevertiefungen vorzusehen, so dass gleichzeitig mehrere Verschleißschwellen durch Sichtkontrolle überwacht werden können.

Weitere Verfahren zum Erkennen eines Verschleißzustands der Gleitfläche 120 können auf einer Messung einer Größe beruhen, die charakteristisch für die Restdicke der Metallisierung 222 ist.

Figur 12 zeigt eine erste Variante, bei welcher nach einem durch Betrieb bewirkten Verschleiß eine Messung dieser Größe durch Annähern und/oder Ansetzen eines Messgerätes 1220 an die Metallisierung 222 vorgenommen wird. Bei der Messung kann es sich beispielsweise um eine Messung des elektrischen Widerstands der Metallisierung 222 über eine gewisse Messstrecke handeln. Beispielsweise kann das Messgerät 1220 ein Handmessgerät sein, welches, wie in Figur 12 dargestellt, die Metallisierung 222 mit Prüfspitzen kontaktiert und den elektrischen Widerstand der Metallisierung 222 zwischen den Prüfpunkten misst. Dieser stellt ein Maß für den aufgetretenen Verschleiß W der Gleitfläche 120A dar.

Das Messgerät 1220 kann beispielsweise eine Anzeige 1225 aufweisen, welche den gemessenen Verschleiß W anzeigt.

Das anhand von Figur 12 dargestellte Verfahren ermöglicht eine quantitative Aussage zum Verschleißzustand der Gleitfläche 120A, ohne dass hierfür eine Verkabelung der Leiterplatte 220 benötigt wird. Die Leiterplatte 220 braucht auch keine Rückseitenmetallisierung 622 aufzuweisen.

Bezugnehmend auf Figur 5 kann die Messung der für die Dicke der Metallisierung 222 charakteristischen Größe aber auch über elektrische Durchkontaktierungen der Leiterplatte 220 erfolgen, beispielsweise indem eine Messung des elektrischen Widerstands R über Leitungsverbindungen 510 vorgenommen wird, die an der rückseitigen Oberfläche 120B aus dem Gleitelement 120 herausgeführt sind. Dies ermöglicht neben einer quantitativen Aussage auch eine Messung des Verschleißzustands zu beliebigen Zeitpunkten, beispielsweise als permanente Messung. Ferner kann die Messung im eingebauten Zustand des Gleitelements 120 erfolgen, d.h. dessen Demontage ist für die Verschleißprüfung nicht erforderlich oder oftmals auch gar nicht möglich, da das Gleitelement 120 in manchen Anwendungen stark verbaut ist.

## Patentansprüche

1. Gleitelement mit einer ebenen metallischen Gleitfläche, die im Betrieb mit einer Gegenfläche eines Bauteils zusammenwirkt und dabei als Verschleißfläche vorgesehen ist, wobei die metallische Gleitfläche eine Aufnahmevertiefung aufweist, in welcher eine zur Verschleißerkennung vorgesehene Leiterplatte mit einer oberflächenseitigen Metallisierung lagefest eingesetzt ist, derart, dass eine Oberfläche der Metallisierung im Wesentlichen koplanar mit oder um eine vorgegebene Distanz vertieft gegenüber der Gleitfläche ist.

2. Gleitelement nach Anspruch 1, wobei die Aufnahmevertiefung als Durchgangsloch ausgeführt ist.

3. Gleitelement nach Anspruch 2, wobei das Durchgangsloch eine Radialstufe aufweist, an welcher die Leiterplatte befestigt ist.

4. Gleitelement nach einem der vorhergehenden Ansprüche, wobei die Metallisierung unstrukturiert ist.

5. Gleitelement nach einem der vorhergehenden Ansprüche, wobei die Dicke der Metallisierung zwischen 35 und 400 µm, insbesondere zwischen 50 und 200 µm beträgt.

6. Gleitelement nach einem der vorhergehenden Ansprüche, wobei die Metallisierung eine Basismetallschicht aus einem Leiterbahnmetall, insbesondere Kupfer, und eine über der Basismetallschicht angeordnete Endschicht aufweist, die aus einem die Basismetallschicht vor Oxidation schützenden Metall, insbesondere Silber oder Gold besteht.

7. Gleitelement nach einem der vorhergehenden Ansprüche, ferner aufweisend:
einen verfestigten Klebstoff zwischen Leiterplatte und Aufnahmevertiefung.

8. Gleitelement nach einem der vorhergehenden Ansprüche, wobei die Leiterplatte elektrische Durchkontaktierungen aufweist, welche eine elektrische Kontaktierung der Metallisierung von der der Metallisierung abgewandten Seite der Leiterplatte ermöglichen.

9. Gleitelement nach einem der Ansprüche 1 bis 7, wobei die Leiterplatte keine elektrischen Durchkontaktierungen aufweist.

10. Gleitelement nach einem der vorhergehenden Ansprüche, wobei Koplanarität der Oberfläche der Metallisierung und der Gleitfläche vorliegt, sofern diese in im Wesentlichen parallelen Ebenen liegen, deren Abstand gleich oder weniger als 20, 15, 10 oder 5 µm beträgt.

11. Gleitelement nach einem der vorhergehenden Ansprüche, wobei die metallische Gleitfläche eine Legierung auf der Basis von Kupfer, insbesondere Bronze oder Messing, oder eine Legierung, die als Legierungskomponente Kupfer umfasst, insbesondere eine Aluminium-Zink Legierung mit Kupfer als Legierungskomponente, aufweist.

12. Verfahren zur Herstellung eines Gleitelements mit einem Mittel zur Verschleißerkennung, umfassend:
Bereitstellen eines Gleitelements mit einer ebenen metallischen Gleitfläche, die im Betrieb mit einer Gegenfläche eines Bauteils zusammenwirkt und dabei als Verschleißfläche vorgesehen ist;
Bilden einer Aufnahmevertiefung in der metallischen Gleitfläche; und
lagefestes Fixieren einer zur Verschleißerkennung vorgesehenen Leiterplatte mit einer oberflächenseitigen Metallisierung in der Aufnahmevertiefung, derart, dass eine Oberfläche der Metallisierung im Wesentlichen koplanar mit oder um eine vorgegebene Distanz vertieft gegenüber der Gleitfläche ist.

13. Verfahren nach Anspruch 12, das ferner umfasst:
Einsetzen der Leiterplatte in die Aufnahmevertiefung, wobei die oberflächenseitige Metallisierung nach außen gewandt ist;
Platzieren des Gleitelements auf einer ebenen Montageplatte, wobei die metallische Gleitfläche auf der ebenen Montageplatte aufliegt;
Ausrichten der Metallisierung der Leiterplatte an der ebenen Montageplatte; und
Einbringen eines Klebstoffes in die Aufnahmevertiefung zum lagefesten Fixieren der Leiterplatte in der Aufnahmevertiefung.

14. Verfahren zum Erkennen eines Verschleißzustands der Gleitfläche eines Gleitelements nach einem der Ansprüche 1 bis 11, umfassend:
nach einem durch Betrieb bewirkten Verschleiß Durchführen einer Sichtprüfung der Metallisierung zum Erkennung einer der ursprünglichen Dicke der Metallisierung entsprechenden Verschleißtiefe.

15. Verfahren zum Erkennen eines Verschleißzustands der Gleitfläche eines Gleitelements nach einem der Ansprüche 1 bis 11, umfassend:
nach einem durch Betrieb bewirkten Verschleiß
Messen einer für die Dicke der Metallisierung charakteristischen Größe durch Annähern und/oder Ansetzen eines Messgerätes an die Metallisierung; oder
Messen einer für die Dicke der Metallisierung charakteristischen Größe über elektrische Durchkontaktierungen der Leiterplatte, die eine elektrische Kontaktierung der Metallisierung von der der Metallisierung abgewandten Seite der Leiterplatte ermöglichen.
